# FASCICULE DE BREVET EUROPEEN

(11) **EP 2 956 753 B1**
(45) Date de publication et mention de la délivrance du brevet: **30.03.2022**
(21) Numéro de dépôt: 14709729.9
(22) Date de dépôt: 10.02.2014
(51) Int. Cl.: G01M 13/021

(54) **DISPOSITIF DE TEST MÉCANIQUE D'UN PIGNON ENTRE UNE DENTURE INTÉRIEURE ET UNE DENTURE EXTÉRIEURE ET/OU ENTRE DEUX DENTURES EXTÉRIEURES SELON UN ANGLE RÉGLABLE**
VORRICHTUNG ZUR MECHANISCHEN PRÜFUNG EINER RITZEL ZWISCHEN EINEM INNEREN ZAHNSATZ UND EINEM ÄUSSEREN ZAHNSATZ UND/ODER ZWISCHEN ZWEI ÄUSSEREN ZAHNSÄTZEN MIT EINEM EINSTELLBAREN WINKEL
DEVICE FOR MECHANICALLY TESTING A PINION BETWEEN AN INTERNAL TOOTHSET AND AN EXTERNAL TOOTHSET AND/OR BETWEEN TWO EXTERNAL TOOTHSETS AT AN ADJUSTABLE ANGLE

(30) Priorité: 13.02.2013 FR 1351231
(43) Date de publication de la demande: 23.12.2015
(73) Titulaire: Safran Transmission Systems, 92700 Colombes (FR)
(72) Inventeur: POIRSON, Nicolas Raymond Jacques, 78430 Louveciennes (FR)
(74) Mandataire: Brevalex
(86) Numéro de dépôt international: PCT/FR2014/050246
(87) Numéro de publication internationale: WO 2014/125198

(56) Documents cités:
- WO-A1-2011/101306
- JP-A- 2012 093 209
- US-A1- 2012 172 174

## Description

### DOMAINE TECHNIQUE

L'invention se rapporte au domaine technique général des systèmes de test de transmission mécanique. Plus précisément, l'invention appartient au domaine technique des dispositifs de test mécanique d'un pignon qui engrène à la fois une denture intérieure et une denture extérieure ou, selon le pignon testé, entre deux dentures extérieures selon un angle réglable. L'invention présente une boucle mécanique fermée pour la mise en charge des pignons, ce type de dispositif étant également connu sous le nom de « banc d'essai back to back ».

### ÉTAT DE LA TECHNIQUE ANTÉRIEURE

Afin de garantir une transmission d'un mouvement avec un minimum de perte d'énergie, il est nécessaire de tester les propriétés mécaniques d'éléments de transmission du mouvement qui peuvent être notamment des roues dentées, des vis sans fin, des crémaillères et des pignons. Ces tests sont réalisés lorsque l'élément de transmission mécanique de mouvement à tester coopère, qu'il soit menant ou mené, avec au moins un autre élément de transmission mécanique de mouvement de manière à former un engrenage. En général, ces tests mécaniques consistent à observer la réponse de l'élément de transmission du mouvement à tester lorsqu'il est mis en couple avec différents efforts.

Il existe de nombreux moyens d'essai permettant de solliciter un pignon à tester sur un engrènement. Pour certains, la mise en couple du pignon peut être directe par l'utilisation d'un frein ou tout autre système résistif. Au-delà d'un certain niveau de puissance, il est nécessaire d'utiliser un dispositif de mise en couple d'une boucle mécanique fermée. Cette boucle est appelée back-to-back. En particulier, la mise en couple du dispositif back-to-back peut se faire par exemple par torsion directe d'une ligne d'arbre ou par translation de dentures hélicoïdales.

Une mise en couple par torsion directe d'un dispositif de test consiste à appliquer une torsion statique à un arbre de liaison présent dans la boucle back-to-back, préalablement ouverte, avant accouplement de manière à maintenir cette torsion. Une mise en couple par torsion directe présente l'inconvénient de ne ni permettre de moduler le couple exercé sur le pignon à tester durant la rotation des différentes pièces du banc d'essai avec le pignon à tester, ni de démarrer le système sans couple appliqué à un support des éléments de transmission du mouvement.

Une mise en couple d'un dispositif de test par translation de dentures hélicoïdales constituant une partie de la boucle back-to-back permet un démarrage à vide. Cependant, avec une telle configuration du système, il est impossible d'appliquer un couple important au pignon à tester en raison de la liaison glissière entre l'arbre des dentures hélicoïdales et les dentures à tester.

De ce fait, il existe un besoin persistant pour un dispositif de test mécanique d'un pignon à tester qui permette d'appliquer un couple important au pignon à tester, en dehors des considérations sur la tenue mécanique pignon à tester, et d'autre part qui permette de démarrer le système sans couple appliqué à un support d'élément de transmission du mouvement.

D1 (JP 2012-093209) divulgue un appareil d'inspection de bruit et de vibrations d'une machine arrière de véhicule automobile.

### EXPOSÉ DE L'INVENTION

L'invention a pour but de résoudre les problèmes rencontrés dans les solutions de l'art antérieur. Elle vise notamment à améliorer les dispositifs de test mécanique de pignons pour que d'une part, ils permettent d'appliquer un couple important au pignon à tester, en dehors des considérations sur la tenue mécanique pignon à tester, et que d'autre part, ils permettent de démarrer le système sans couple appliqué à un support d'élément de transmission du mouvement.

A cet égard, l'invention a pour objet un dispositif de test mécanique d'un pignon à tester comprenant :
- une couronne munie de dents intérieures configurée pour engrener un pignon à tester, l'axe de la couronne étant fixe par rapport à celui du pignon à tester,
- un support de couronne sur lequel est placée la couronne,
- un élément central de transmission de mouvement, configuré pour avoir un mouvement de rotation autour d'un axe fixe par rapport à celui de la couronne munie de dents intérieures,
- un pignon de sollicitation de la couronne, configuré pour engrener les dents intérieures de la couronne,
- un support mobile portant le pignon de sollicitation de la couronne et l'élément central de transmission de mouvement,
- un support du pignon à tester, fixe par rapport au support de couronne,
- des moyens de mise en rotation du support mobile autour de l'axe de la couronne, durant la mise en mouvement de l'ensemble formé par le pignon à tester, la couronne munie de dents intérieures, l'élément central de transmission et le pignon de sollicitation de la couronne.

La mise en mouvement de l'ensemble est définie par la mise en mouvement de chaque élément de l'ensemble. Elle peut se faire dans le dispositif de test de pignon à tester indépendamment de la mise en rotation du support mobile, c'est-à-dire notamment avant, en même temps, après ou sans la mise en rotation du support mobile. Le dispositif peut ainsi être démarré sans couple appliqué à un support d'élément de transmission du mouvement.

Le dispositif permet également d'appliquer un couple important au pignon à tester, lorsque le support mobile a été incliné de manière à ce que le pignon de sollicitation de la couronne engrène les dents intérieures de la couronne à proximité du pignon à tester. En particulier, il est possible de mettre en rotation le support mobile, de façon à ce que le pignon de sollicitation de la couronne se rapproche ou s'éloigne de plus en plus le long de la couronne vers le pignon à tester. La principale limite dans la mise en rotation du support mobile résulte de considérations sur la tenue mécanique du pignon à tester sur lequel s'exerce un effort de plus en plus important dans ce cas.

De fait, les moyens de mise en rotation du support mobile autour de l'axe de la couronne permettent de moduler la valeur du couple appliqué au pignon à tester par la rotation du support mobile autour de l'axe de la couronne durant la mise en mouvement de l'ensemble.

L'élément central de transmission est configuré de manière à engrener le pignon à tester, lors du test mécanique du pignon à tester. L'élément central de transmission de mouvement peut être de différente nature. Il peut s'agir par exemple d'une vis sans fin, d'une roue dentée ou d'un pignon, chacun pouvant être notamment d'axe parallèle à l'axe de la couronne. Le choix d'un élément central de transmission de mouvement approprié ainsi que la position de son axe fait partie des connaissances générales de l'homme du métier.

De préférence, l'axe de l'élément central de transmission de mouvement est confondu avec l'axe de la couronne. Dans ce cas, l'axe de l'élément central de transmission de mouvement reste fixe. Le dispositif présente ainsi une plus grande simplicité. De plus, il est également plus facile de moduler l'effort exercé sur le pignon à tester.

L'invention peut comporter de manière facultative une ou plusieurs des caractéristiques suivantes combinées entre elles ou non :
Des moyens de mise en rotation du support mobile comprenant un vérin offrent potentiellement de nombreuses positions stables, en déplaçant le pignon de sollicitation dent par dent le long de la couronne du fait de l'actionnement du vérin. Un vérin permet ainsi de pouvoir moduler facilement le couple exercé sur le pignon à tester, durant la mise en mouvement de l'ensemble. En fonction de la position et du nombre de vérins des moyens de mise en rotation du support mobile, le dispositif de test de pignon à tester présente comme principale limite sur la valeur maximale du couple à appliquer sur le pignon à tester les valeurs issues de considérations de tenue mécanique des éléments de l'ensemble formé par la couronne dentée, l'élément central de transmission de mouvement, le pignon à tester et le pignon de sollicitation de la couronne.

Le vérin comprend de préférence une première et une seconde extrémité, la première extrémité reliant le vérin à un support fixe par rapport au support de couronne, la seconde extrémité reliant le vérin au support mobile dans une zone de liaison. Il existe au moins deux alternatives envisageables pour la position du vérin.

Une première alternative consiste en ce que l'élément central de transmission de mouvement soit porté par le support mobile entre le pignon de sollicitation de la couronne et la zone de liaison.

Dans cette alternative où la zone de liaison se trouve à proximité d'une extrémité distale du support mobile par rapport au pignon de sollicitation de la couronne, le vérin peut faire effet de levier pour mettre en rotation le pignon de sollicitation de la couronne. Il peut être possible alors d'utiliser un vérin de plus faible puissance. Cette alternative permet également que la fixation du vérin au support mobile soit indépendante de la fixation du pignon de sollicitation de la couronne au support mobile.

Une seconde alternative consiste en ce que le pignon de sollicitation de la couronne soit porté par le support mobile entre l'élément central de transmission de mouvement et la zone de liaison. Comme le vérin travaille en compression au lieu de travailler en élongation, lorsqu'il met en rotation le support mobile de façon à ce que le pignon de sollicitation de la couronne se rapproche de plus en plus le long de la couronne vers le pignon à tester, il est possible d'utiliser un vérin de plus petite taille dans la seconde alternative.

Selon cette alternative, dans un premier cas, la zone de liaison peut se trouver au niveau de la zone de fixation du pignon de sollicitation de la couronne au support mobile, par exemple au niveau d'un arbre du pignon de sollicitation de la couronne. Le dispositif de test peut alors être plus compact.

Dans un second cas, le vérin peut se trouver à l'extérieur de la périphérie des dents intérieures de la couronne. Comme le support mobile offre alors un bras de levier plus long, la dimension du vérin peut être réduite davantage par rapport au premier cas.

De préférence, les moyens de mise en rotation du support mobile sont configurés pour permettre un déplacement du pignon de sollicitation de la couronne sur une ouverture angulaire au niveau de l'extrémité des dents de la couronne extérieure suffisante pour atteindre l'effort d'engrènement désiré.

Il est alors possible d'appliquer un couple qui peut varier sur une grande amplitude durant la mise en mouvement de l'ensemble. L'ouverture angulaire importante de déplacement du pignon de sollicitation de la couronne permet d'exercer des couples de valeur importante sur le pignon à tester.

Il est préférable que l'élément central de transmission de mouvement soit une roue dentée. L'axe de l'élément central de transmission est alors de préférence confondu avec l'axe de la couronne. Le dispositif présente alors au moins trois roues dentées lors du test mécanique, le pignon de sollicitation de la couronne, le pignon à tester et l'élément central de transmission du mouvement. Le dispositif de test mécanique présente l'avantage de présenter une certaine symétrie du fait des trois roues dentées, de pouvoir être plus compact, notamment en présentant une épaisseur plus faible dans la direction de l'axe de la couronne.

De préférence, le pignon de sollicitation de la couronne est identique au pignon à tester. Le pignon de sollicitation peut être choisi en particulier pour présenter une même denture et la même taille, aux erreurs de manufacture près. Lorsque l'élément central de transmission du mouvement est une roue dentée, le pignon de sollicitation forme alors un engrenage avec l'élément central de transmission du mouvement.

Dans ce cas il est également possible de tester mécaniquement l'élément central de transmission du mouvement entre deux dentures extérieures selon un angle réglable. L'élément central de transmission de mouvement vient alors engrener le pignon à tester et le pignon de sollicitation de la couronne. L'angle formé par le pignon à tester, l'élément central de transmission de mouvement et le pignon de sollicitation de la couronne est réglable dans la limite des résistances mécaniques des différents éléments du dispositif. Le dispositif pourra être mis en charge de manière à obtenir l'angle adéquat.

Bien que l'élément central de transmission de mouvement puisse être de diverse nature et former tout type d'engrenage avec le pignon à tester, l'élément central de transmission de mouvement et le pignon à tester forment de préférence un engrenage parallèle. Le dispositif peut être notamment configuré de manière à ce que lors du test mécanique, l'élément central de transmission de mouvement et le pignon à tester, le pignon à tester et la couronne, la couronne et le pignon de sollicitation de la couronne forment chacun un engrenage parallèle. Le dispositif peut être plus compact et présenter une plus grande symétrie, notamment lorsque l'axe de l'élément central de transmission est confondu avec l'axe de la couronne. Un couple plus important peut être exercé sur le pignon à tester. Le système peut également plus facilement être démarré sans couple appliqué à un support d'élément de transmission du mouvement.

Le pignon à tester peut présenter tout type de denture, par exemple une denture hélicoïdale ou denture à chevron ou bien des dents droites. Les dentures de l'élément central de transmission de mouvement, de la couronne dentée et de ce fait du pignon de sollicitation de la couronne sont configurées en fonction de la denture du pignon à tester.

L'ensemble peut être configuré pour être mis en mouvement par la mise en rotation d'un élément de transmission de mouvement choisi parmi le pignon à tester, l'élément central de transmission de mouvement, la couronne et le pignon de sollicitation de la couronne. La mise en mouvement d'un seul élément de l'ensemble par des moyens appropriés permet la mise en mouvement de chaque élément de l'ensemble. Les moyens appropriés font partie des connaissances générales de l'homme du métier. Il s'agit par exemple de tous moyens d'application d'un couple à l'un des éléments de transmission. La mise en mouvement de l'ensemble continue bien entendu de se faire dans le dispositif de test indépendamment de la mise en rotation du support mobile.

L'invention a également pour objet un procédé de test mécanique d'un pignon à tester à partir d'un dispositif de test d'un pignon à tester comprenant au moins :
- une étape de mise en rotation du support mobile autour de l'axe de la couronne, étape durant laquelle l'ensemble formé par le pignon à tester, la couronne munie de dents intérieures, l'élément central de transmission de mouvement et le pignon de sollicitation de la couronne est mis en mouvement.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 représente une vue de trois quart face d'un dispositif de test mécanique d'un pignon à tester selon un mode de réalisation préféré de l'invention;
- la figure 2 est une vue de face du dispositif de test mécanique de pignon à tester de la figure 1 au repos;
- la figure 3 illustre le dispositif de test mécanique de pignon à tester de la figure 1 en fonctionnement en vue de face;
- la figure 4 est une vue de face d'un second mode de réalisation de l'invention;
- la figure 5 est une vue de face d'un troisième mode de réalisation de l'invention.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes variantes doivent être comprises comme n'étant pas exclusives les unes des autres et peuvent se combiner entre elles.

En référence à chaque figure, il est représenté un dispositif 1 de test mécanique d'un pignon à tester 20, qui engrène avec un angle de 180° à la fois une denture intérieure et une denture extérieure. Du point de vue mécanique, il est important d'effectuer cette distinction puisque la répartition des contraintes n'est pas la même sur une denture intérieure et une denture extérieure. Le dispositif 1 de test selon l'invention est représentatif d'un engrènement sur les dentures intérieures 31 d'une couronne dentée 30.

Le dispositif 1 de test mécanique de pignon à tester 20 comporte une couronne 30 munie de dents intérieures 31 d'axe 32 placée sur un support de couronne 33. Le pignon à tester 20 est placé sur un support 23 de pignon à tester 20, qui est fixe par rapport au support de la couronne 30. Un élément central de transmission du mouvement 40 porté par du support mobile 60 vient engrener le pignon à tester 20 lors du test mécanique du pignon à tester 20. Le support mobile 60 porte l'élément central de transmission du mouvement 40 et un pignon 50 de sollicitation de la couronne 30. Le pignon 50 de sollicitation de la couronne 30 est configuré pour engrener les dents intérieures 31 de la couronne 30. Des moyens de mise en rotation 70 du support mobile 60 permettent de faire pivoter le pignon 50 de sollicitation de la couronne 30 autour de l'axe 32 de la couronne 30, durant la mise en mouvement autour de leur axe respectif de chaque élément de l'ensemble 2 formé par le pignon à tester 20, la couronne 30, l'élément central de transmission de mouvement 40, le pignon 50 de sollicitation de la couronne 30.

Les moyens de mise en rotation 70 du support mobile 60 comprennent un vérin 71 comprenant une première extrémité 71a connectée à un support 73 fixe par rapport au support 33 de la couronne 30 et une seconde extrémité 71b connectée au support mobile 60 dans une zone de liaison 60a du support mobile 60. En pratique, la seconde extrémité 71b du vérin 71 présente un axe 72. La seconde extrémité 71b a par exemple la forme d'un anneau. Le vérin 71 est un vérin linéaire qui peut être de tout type, par exemple manuel, électrique, pneumatique ou hydraulique. Tout vérin adapté au dispositif 1 de test mécanique et connu de l'homme du métier peut être utilisé dans le dispositif 1.

L'axe 72 de la seconde extrémité 71b du vérin 71 et l'axe du pignon 50 de sollicitation de la couronne 30 sont susceptibles d'être mobiles lors de l'actionnement des moyens de mise en rotation 70 du support mobile 60. L'axe de rotation 22 du pignon à tester 20 est fixe par rapport à l'axe de la couronne 32. L'axe de rotation du support mobile 60, l'axe de l'élément central de transmission du mouvement 40 et l'axe de la couronne sont confondus.

L'axe de rotation 22 du pignon à tester 20 et l'axe de rotation 52 du pignon de sollicitation 50 de la couronne 30 sont parallèles entre eux et sont de préférence parallèles à l'axe de la couronne 32. Dans tous les modes de réalisation représentés sur les figures, les axes de la couronne 32, celui 52 du pignon 50 de sollicitation de la couronne 30 et celui de la couronne 32 sont parallèles au repos et restent parallèles lors du test mécanique du pignon à tester 20, aux erreurs de manufacture près.

Dans des variantes du mode de réalisation préféré non représentées, l'axe 22 du support 23 de pignon à tester 20 et l'axe 52 du pignon 50 de sollicitation de la couronne 30 pourraient ne pas être parallèle à l'axe 32 de la couronne 30, par exemple dans le cas où l'élément central de transmission de mouvement 40 et le pignon à tester 20 formeraient un engrenage gauche ou encore pour permettre d'ajuster la position relative de chaque axe.

L'engrenage formé par le pignon à tester 20 et l'élément central de transmission de mouvement 40 peut être de différente nature en fonction du pignon à tester et notamment de sa denture qui peut être par exemple droite ou hélicoïdale. L'engrenage formé par le pignon à tester et l'élément central de transmission de mouvement 40 pourrait notamment être droite ou gauche, voire conique.

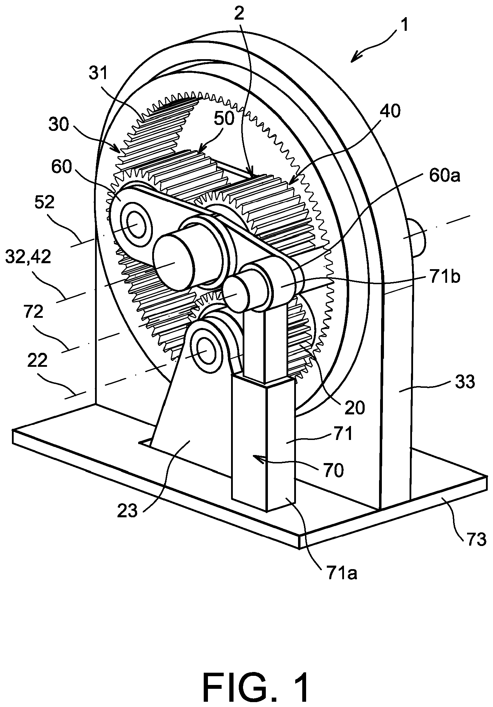

Dans les modes de réalisation des figures 1 à 5, le pignon à tester 20 a une denture droite. Par ailleurs, le pignon à tester 20 et l'élément central de transmission 40, la couronne 30 et le pignon à tester 20, la couronne 30 et le pignon de sollicitation de la couronne forment chacun un engrenage parallèle. De plus, comme le pignon 50 de sollicitation de la couronne 30 est identique au pignon à tester 20, le pignon de sollicitation de la couronne 50 engrène avec l'élément central de transmission du mouvement 40 qui est en forme de roue dentée, en formant un engrenage parallèle. Dans cette configuration, tous les engrenages sont parallèles. Le pignon 50 de sollicitation de la couronne 30 avec la couronne dentée, le pignon 50 de sollicitation de la couronne 30 avec l'élément central de transmission de mouvement 40, l'élément central de transmission de mouvement 40 avec le pignon à tester 20, le pignon à tester 20 avec la couronne dentée forment un train d'engrenage parallèle en boucle fermée. Cette boucle fermée appelée boucle back-to-back présente l'avantage de pouvoir exercer un couple plus important sur le pignon à tester 20 qu'un système ouvert présentant un dispositif de freinage grâce à un système de translation. Dans cette configuration des modes de réalisation des figures 1 à 5, il est également possible de tester la résistance mécanique de l'élément central de transmission de mouvement 40, l'élément central de transmission de mouvement 40 engrenant deux dentures extérieures formant un angle variable.

Les dentures de la couronne dentée 30, de l'élément central de transmission de mouvement 40 et du pignon 50 de sollicitation de la couronne 30 sont configurées pour engrener celle du pignon à tester 20. C'est-à-dire que le nombre de dents, la forme des dents, les dimensions des dents de chaque denture sont paramétrés en fonction de la denture du pignon à tester. La configuration des dentures des différents éléments de transmission du mouvement, 30, 40, 50 en fonction de celle du pignon à tester 20 fait partie des compétences usuelles de l'homme du métier. Sur toutes les figures, le pignon à tester 20 présente une denture droite et les dentures de la couronne 30, de l'élément central de transmission du mouvement 40, du pignon 50 de sollicitation de la couronne 30 sont des dentures droites.

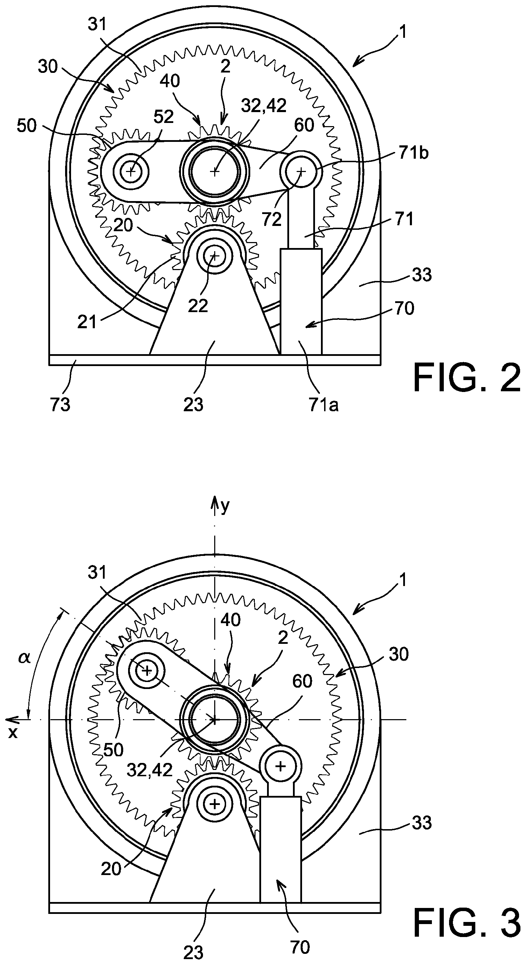

En référence à chaque figure, l'actionnement du vérin 71 des moyens de mise en rotation 70 du support mobile 60 entraîne le pivotement du support mobile 60 autour de l'axe 32 de la couronne 30 indépendamment de la mise en mouvement de l'ensemble 2 et surtout indépendamment de la mise en mouvement éventuelle de l'élément central de transmission du mouvement 40. Le pivotement du support mobile 60 provoque le déplacement de l'axe 52 du pignon 50 de sollicitation de la couronne 30 le long d'un arc de cercle concentrique avec la couronne. En référence plus spécifiquement à la figure 3, en notant α l'angle formé par l'axe 52 du pignon 50 de sollicitation de la couronne 30 avec une droite parallèle, notée axe x, avec la base du support 33 de la couronne 30. Le pignon 50 de sollicitation de la couronne se déplace le long de la couronne en venant engrener les dents intérieures 31 de la couronne 30 entre un angle amax et un angle αmin correspondants aux déplacements extrémaux du vérin 71 le long d'un axe perpendiculaire à la base du support 33 de la couronne 30. Autrement dit, les moyens de mise en rotation 70 du support mobile 60 sont configurés pour permettre un déplacement du pignon 50 de sollicitation de la couronne 30 sur une ouverture angulaire au niveau de l'extrémité des dents de la couronne extérieure suffisante pour rattraper les jeux, contrer la déformation des différents élément et atteindre l'effort d'engrènement désiré. La position de la fixation 71a du moyen de mise en rotation 70 du support mobile 60, le mode de fixation 71a du moyen de mise en rotation 70 du support mobile 60 et la course des moyens de mise en rotation 70 seront adaptés pour assurer le débattement angulaire nécessaire. Le choix de ce débattement angulaire fait partie des compétences usuelles de l'homme du métier.

Plus l'angle α augmente en valeur algébrique, c'est-à-dire plus le pignon 50 de sollicitation de la couronne 30 s'éloigne de l'axe x, plus le couple appliqué sur le pignon à tester est important. La principale limite de déplacement du pignon 50 de sollicitation de la couronne 30 le long de la couronne 30 vers le pignon à tester 20, mis à part les limites dues à la configuration d'un vérin 71 particulier, résulte de la tenue mécanique de l'élément central de transmission 40, du pignon 50 de sollicitation de la couronne 30, de la couronne 30 et surtout du pignon à tester 20. Le test mécanique d'un pignon à tester 20 selon l'invention se veut de préférence non destructif mais il serait éventuellement envisageable d'incliner le pignon 50 de sollicitation de la couronne 30 sous l'action des moyens de mise en rotation 70 du support mobile 60 jusqu'à endommager le pignon à tester 20.

Lors du test mécanique d'un pignon à tester 20 à partir du dispositif 1 du mode de réalisation des figures 1 à 3, le support mobile 60 sont mis en rotation par les moyens de mise en rotation 70 du support mobile, jusqu'à ce que le pignon 50 de sollicitation de la couronne 30 ait l'inclinaison souhaitée et qu'il s'exerce le couple de la valeur souhaité sur le pignon à tester 20, durant la mise en mouvement de chaque élément autour de son axe de rotation de l'ensemble 2 formé par le pignon à tester 20, la couronne 30, le pignon 50 de sollicitation de la couronne 30, l'élément central de transmission de mouvement 40.

Lors du procédé de test mécanique du pignon à tester 20, la mise en mouvement de l'ensemble 2 se fait indépendamment de la rotation du support mobile 60 sous l'action des moyens de mise en rotation 70 du support mobile 60. La mise en mouvement de l'ensemble 2 se fait uniquement par la rotation d'un élément de transmission de mouvement 20, 40, 50 choisi parmi le pignon à tester 20, l'élément central de transmission de mouvement 40 et le pignon de sollicitation de la couronne 50. Comme le pignon à tester 20, l'élément central de transmission de mouvement 40 et le pignon de sollicitation de la couronne 50 s'entraînent mutuellement par l'intermédiaire de la couronne 30, il suffit de mettre en rotation un de ces éléments de transmission du mouvement pour mettre en rotation autour de leur axe tous les autres. Un dispositif auxiliaire (non représenté) pour exercer un couple sur un seul seulement de ces éléments choisi parmi n'importe lequel d'entre eux peut être prévu pour mettre l'ensemble 2 en mouvement.

Dans le mode de réalisation des figures 1 à 3, l'élément central de transmission de mouvement 40 est porté par le support mobile 60 entre le pignon 50 de sollicitation de la couronne 30 et la zone de liaison 60a de la seconde extrémité 71b du vérin. L'élément central de transmission de mouvement 40 peut aussi être porté par l'intermédiaire de l'axe 42 indépendamment du moyen de support 60, par exemple au moyen d'un bâti relié au support fixe 73.. Le moyen de support 60 pourra alors être soit porté par l'axe 42, soit être porté par un moyen de support relié au support fixe 73.

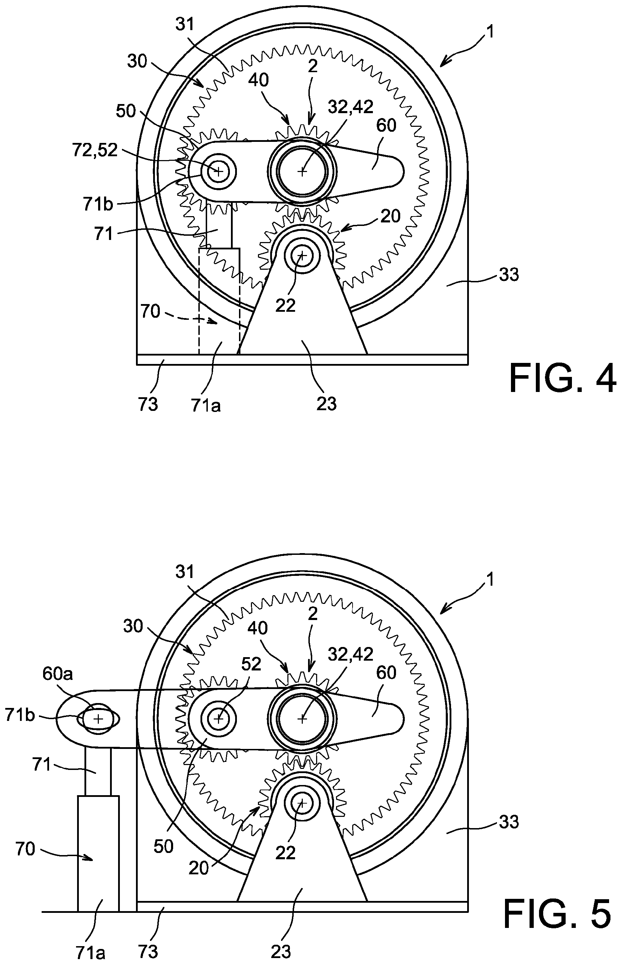

Les modes de réalisation des figures 4 et 5 ne se différencient structurellement du mode de réalisation de la figure 3 que par la structure des moyens de mise en rotation 70 du support mobile, plus précisément par la position du vérin 71 des moyens de mise en rotation 70 du support mobile 60. Dans cette seconde alternative, l'élément central de transmission de mouvement 40 est porté par le support mobile 60 entre le pignon 50 de sollicitation de la couronne 30 et la zone de liaison 60a de la seconde extrémité 71b du vérin. Comme on peut mieux le voir sur la figure 5, la zone de liaison 60a peut avoir par exemple la forme d'une lumière coopérant avec la seconde extrémité du vérin 71b, de manière à pouvoir permettre la mise en rotation du support mobile 60.

Dans un premier cas qui correspond à celui du mode de réalisation de la figure 4, la zone de liaison 60a se trouve au niveau de la zone de fixation du pignon 50 de sollicitation de la couronne 30 au support mobile 60, par exemple au niveau d'un arbre du pignon 50 de sollicitation de la couronne 30. Le dispositif 1 de test peut alors être plus compact.

Dans un second cas qui correspond à celui du mode de réalisation de la figure 5, le vérin71 se trouve à l'extérieur de la périphérie des dents intérieures 31 de la couronne 30. De la même façon, il serait possible d'envisager une variante (non représentée) de la figure 2 où le vérin se trouverait à l'extérieur de la périphérie des dents intérieures 31 de la couronne 30, du côté opposé à celui où il est représenté à la figure 5.

En fonction de la position du vérin 71, il est possible d'adapter le couple maximal qu'il est possible d'appliquer au pignon à tester 20. La configuration du vérin 71, en particulier la taille et la puissance requise du vérin 71 sont également variables suivant la position du vérin. Le fonctionnement du dispositif 1 de test mécanique d'un pignon à tester 20 du mode de réalisation des figures 4 et 5, en particulier la mise en rotation du support mobile 60 sous l'action des moyens de mis en rotation 70 du support mobile 60 et le procédé de test mécanique du pignon à tester est identique à ce qui a été décrit en référence à la figure 3, mutatis mutandis. Etant donné que, dans la seconde alternative, le vérin 71 travaille en compression lorsqu'il incline le support mobile 60 vers le pignon à tester 20, le vérin 71 est de plus petite taille que dans la première alternative. En particulier, dans le mode de réalisation des figures 1 à 3, lorsque le vérin 71 est en élongation maximale, le pignon 50 de sollicitation de la couronne 30 est le plus proche le long de la périphérie de la couronne 30 du pignon à tester 20. Dans le mode de réalisation des figures 4 et 5, le pignon 50 de sollicitation de la couronne 30 est le plus proche le long de la périphérie de la couronne 30 du pignon à tester 20 lorsque le vérin 71 est en compression maximale. Dans le mode de réalisation des figures 1 à 3, plus l'élongation du vérin 71 est importante, plus le pignon de sollicitation de la couronne 30 est proche le long de la périphérie de la couronne 30 du pignon à tester 20. Dans le mode de réalisation des figures 4 et 5, plus la compression du vérin 71 est importante, plus le pignon de sollicitation de la couronne 30 est proche le long de la périphérie de la couronne 30 du pignon à tester 20.

## Revendications

1. Dispositif (1) de test mécanique d'un pignon à tester (20) comprenant :
- une couronne (30) munie de dents intérieures (31), configurée pour engrener un pignon à tester (20), l'axe (32) de la couronne(30) étant fixe par rapport à celui (22) du pignon à tester (20),
- un support de couronne (33) sur lequel est placée la couronne (30),
- un élément central de transmission de mouvement (40), configuré pour avoir un mouvement de rotation autour d'un axe (42) fixe par rapport à celui de la couronne (30) munie de dents intérieures (31),
- un pignon (50) de sollicitation de la couronne (30), configuré pour engrener les dents intérieures (31) de la couronne (30),
- un support mobile (60) comprenant un bras de levier, le support mobile (60) portant le pignon (50) de sollicitation de la couronne (30) et l'élément central de transmission de mouvement (40),
**caractérisé en ce qu'**il comprend en outre :
- un support (23) de pignon à tester (20), fixe par rapport au support (33) de couronne (30), et
- des moyens de mise en rotation (70) du support mobile (60) autour de l'axe (32) de la couronne (30), durant la mise en mouvement de l'ensemble (2) formé par le pignon à tester (20), la couronne (30) munie de dents intérieures (31), l'élément central de transmission (40) et le pignon (50) de sollicitation de la couronne (30), les moyens de mise en rotation (70) du support mobile (60) comprenant au moins un vérin (71).

2. Dispositif (1) selon la revendication précédente, **caractérisé en ce que** le vérin (71) comprend une première (71a) et une seconde extrémité (71b), la première extrémité (71a) reliant le vérin (71) à un support (73) fixe par rapport au support (33) de couronne (30), la seconde extrémité (71b) reliant le vérin (71) au support mobile (60) dans une zone de liaison (60a), l'élément central de transmission de mouvement (40) étant porté par le support mobile (60) entre le pignon (50) de sollicitation de la couronne (30) et la zone de liaison (60a).

3. Dispositif (1) selon la revendication 1, **caractérisé en ce que** le vérin (71) comprend une première (71a) et une seconde extrémité (71b), la première extrémité (71a) reliant le vérin (71) à un support (73) fixe par rapport au support (33) de couronne (30), la seconde extrémité (71b) reliant le vérin (71) au support mobile (60) dans une zone de liaison (60a), le pignon (50) de sollicitation de la couronne (30) étant porté par le support mobile (60) entre l'élément central de transmission de mouvement (40) et la zone de liaison (60a).

4. Dispositif (1) selon l'une quelconque des revendications précédentes, **caractérisé en ce que** les moyens de mise en rotation (70) du support mobile (60) sont configurés pour permettre un déplacement du pignon (50) de sollicitation de la couronne (30) sur une ouverture angulaire au niveau de l'extrémité des dents de la couronne extérieure permettant d'atteindre le chargement des pignons désiré pour le test.

5. Dispositif (1) selon l'une quelconque des revendications précédentes, **caractérisé en ce que** l'élément central de transmission de mouvement (40) est une roue dentée.

6. Dispositif (1) selon l'une quelconque des revendications précédentes, **caractérisé en ce que** le pignon (50) de sollicitation de la couronne (30) est identique au pignon à tester (20).

7. Dispositif (1) selon l'une quelconque des revendications précédentes, **caractérisé en ce que** l'élément central de transmission de mouvement (40) et le pignon à tester (20), le pignon à tester (20) et la couronne (30), la couronne (30) et le pignon (50) de sollicitation de la couronne (30) forment chacun un engrenage parallèle.

8. Dispositif (1) selon l'une quelconque des revendications précédentes, **caractérisé en ce que** l'ensemble (2) est mis en mouvement par la mise en rotation d'un élément de transmission de mouvement (20, 30, 40, 50) choisi parmi le pignon à tester (20), la couronne (30), l'élément central de transmission de mouvement (40) et le pignon de sollicitation de la couronne (50).

9. Procédé de test mécanique d'un pignon à tester (20) à partir d'un dispositif (1) de test mécanique d'un pignon à tester (20) selon l'une quelconque des revendications précédentes, **caractérisé en ce qu'**il comprend au moins :
- une étape de mise en rotation du support mobile (60) autour de l'axe (32) de la couronne (30), étape durant laquelle l'ensemble (2) formé par le pignon à tester (20), la couronne (30) munie de dents intérieures (31), l'élément central de transmission de mouvement (40) et le pignon (50) de sollicitation de la couronne (30) est mis en mouvement.

## Patentansprüche

1. Vorrichtung (1) zur mechanischen Prüfung eines zu prüfenden Ritzels (20) mit:
- einem mit Innenzähnen (31) versehenen Kranz (30) zum Eingreifen in ein zu prüfendes Ritzel (20), wobei die Achse (32) des Kranzes (30) bezüglich der (22) des zu prüfenden Ritzels (20) feststeht,
- einem Kranzträger (33), auf dem der Kranz (30) platziert ist,
- einem mittigen Bewegungsübertragungselement (40), das für eine Drehbewegung um eine Achse (42) ausgeführt ist, welche bezüglich derjenigen des mit Innenzähnen (31) versehenen Kranzes (30) feststeht,
- einem Ritzel (50) zur Beaufschlagung des Kranzes (30), das zum Eingreifen in die Innenzähne (31) des Kranzes (30) ausgeführt ist,
- einem beweglichen Träger (60) mit einem Hebelarm, wobei der bewegliche Träger (60) das Ritzel (50) zur Beaufschlagung des Kranzes (30) und das mittige Bewegungsübertragungselement (40) trägt,
**dadurch gekennzeichnet, dass** die Vorrichtung außerdem Folgendes aufweist:
- einen Träger (23) des zu prüfenden Ritzels (20), der bezüglich des Trägers (33) des Kranzes (30) feststehend ist, sowie
- Mittel zum Drehen (70) des beweglichen Trägers (60) um die Achse (32) des Kranzes (30), während die durch das zu prüfende Ritzel (20), den mit Innenzähnen (31) versehenen Kranz (30), das mittige Übertragungselement (40) und das Ritzel (50) zur Beaufschlagung des Kranzes (30) gebildete Anordnung (2) in Bewegung versetzt wird, wobei die Mittel zum Drehen (70) des beweglichen Trägers (60) mindestens einen Zylinder (71) aufweisen.

2. Vorrichtung (1) nach dem vorhergehenden Anspruch, **dadurch gekennzeichnet, dass** der Zylinder (71) ein erstes (71a) und ein zweites Ende (71b) aufweist, wobei das erste Ende (71a) den Zylinder (71) mit einem Träger (73) verbindet, der bezüglich des Trägers (33) des Kranzes (30) feststehend ist, wobei das zweite Ende (71b) den Zylinder (71) in einem Verbindungsbereich (60a) mit dem beweglichen Träger (60) verbindet, wobei das mittige Bewegungsübertragungselement (40) von dem beweglichen Träger (60) zwischen dem Ritzel (50) zur Beaufschlagung des Kranzes (30) und dem Verbindungsbereich (60a) getragen wird.

3. Vorrichtung (1) nach Anspruch 1, **dadurch gekennzeichnet, dass** der Zylinder (71) ein erstes (71a) und ein zweites Ende (71b) aufweist, wobei das erste Ende (71a) den Zylinder (71) mit einem Träger (73) verbindet, der bezüglich des Trägers (33) des Kranzes (30) feststeht, wobei das zweite Ende (71b) den Zylinder (71) in einem Verbindungsbereich (60a) mit dem beweglichen Träger (60) verbindet, wobei das Ritzel (50) zur Beaufschlagung des Kranzes (30) von dem beweglichen Träger (60) zwischen dem mittigen Bewegungsübertragungselement (40) und dem Verbindungsbereich (60a) getragen wird.

4. Vorrichtung (1) nach einem der vorhergehenden Ansprüche, **dadurch gekennzeichnet, dass** die Mittel zum Drehen (70) des beweglichen Trägers (60) dazu ausgeführt sind, eine Verschiebung des Ritzels (50) zur Beaufschlagung des Kranzes (30) über eine Winkelöffnung auf Höhe des Endes der Zähne des Außenkranzes zu ermöglichen, wodurch die für die Prüfung gewünschte Belastung der Ritzel erzielt wird.

5. Vorrichtung (1) nach einem der vorhergehenden Ansprüche, **dadurch gekennzeichnet, dass** das mittige Bewegungsübertragungselement (40) ein Zahnrad ist.

6. Vorrichtung (1) nach einem der vorhergehenden Ansprüche, **dadurch gekennzeichnet, dass** das Ritzel (50) zur Beaufschlagung des Kranzes (30) identisch mit dem zu prüfenden Zahnrad (20) ist.

7. Vorrichtung (1) nach einem der vorhergehenden Ansprüche, **dadurch gekennzeichnet, dass** das mittige Bewegungsübertragungselement (40) und das zu prüfende Ritzel (20), das zu prüfende Ritzel (20) und der Kranz (30), der Kranz (30) und das Ritzel (50) zur Beaufschlagung des Kranzes (30) jeweils ein paralleles Getriebe bilden.

8. Vorrichtung (1) nach einem der vorhergehenden Ansprüche, **dadurch gekennzeichnet, dass** die Anordnung (2) durch die Drehung eines Bewegungsübertragungselements (20, 30, 40, 50), welches aus dem zu prüfenden Ritzel (20), dem Kranz (30), dem mittigen Bewegungsübertragungselement (40) und dem Ritzel zur Beaufschlagung des Kranzes (50) ausgewählt ist, in Bewegung versetzt wird.

9. Verfahren zur mechanischen Prüfung eines zu prüfenden Ritzels (20) anhand einer Vorrichtung (1) zur mechanischen Prüfung eines zu prüfenden Ritzels (20) nach einem der vorhergehenden Ansprüche, **dadurch gekennzeichnet, dass** es mindestens Folgendes aufweist:
- einen Schritt des Drehens des beweglichen Trägers (60) um die Achse (32) des Kranzes (30), wobei während dieses Schrittes die durch das zu prüfende Ritzel (20), den mit Innenzähnen (31) versehenen Kranz (30), das mittige Bewegungsübertragungselement (40) und das Ritzel (50) zur Beaufschlagung des Kranzes (30) gebildete Anordnung (2) in Bewegung versetzt wird.

## Claims

1. Mechanical test device (1) of a pinion to be tested (20) comprising:
- an internal gear (30) with internal teeth (31), configured to engage a pinion to be tested (20), the axis (32) of the internal gear (30) being fixed relative to the axis (22) of the pinion to be tested (20),
- an internal gear support (33) on which the internal gear (30) is installed,
- a central movement transmission element (40), configured to have a rotation movement about a fixed axis (42) fixed relative to the axis of the internal gear (30) provided with internal teeth (31),
- a pinion (50) to drive the internal gear (30), configured to engage the internal teeth (31) of the internal gear (30),
- a mobile support (60) comprising a lever arm, wherein the internal gear (30) drive pinion (50) is fixed on the mobile support (60),
- a support (23) for the pinion to be tested (20), fixed relative to the internal gear (30) support (33),
- means (70) for putting the mobile support (60) in rotation about the axis (32) of the internal gear (30), while the assembly (2) composed of the pinion to be tested (20), the internal gear (30) with its internal teeth (31), the central transmission element (40) and the pinion (50) driving the internal gear (30) is put into movement, wherein the means (70) for putting the mobile support (60) in rotation include at least one actuator (71).

2. Device (1) according to the previous claim, **characterised in that** the actuator (71) comprises a first end (71a) and a second end (71b), the first end (71a) connecting the actuator (71) to a support (73) fixed relative to the support (33) of the internal gear (30), the second end (71b) connecting the actuator (71) to the mobile support (60) within a connection zone (60a), the central movement transmission element (40) being supported by the mobile support (60) between the internal gear (30) drive pinion (50) and the connection zone (60a).

3. Device (1) according to claim 1, **characterised in that** the actuator (71) comprises a first end (71a) and a second end (71b), the first end (71a) connecting the actuator (71) to a support (73) fixed relative to the support (33) of the internal gear (30), the second end (71b) connecting the actuator (71) to the mobile support (60) in a connection zone (60a), the pinion (50) driving the internal gear (30) being supported by the mobile support (60) between the central movement transmission element (40) and the connection zone (60a).

4. Device (1) according to any one of the previous claims, **characterised in that** the means (70) for putting the mobile support (60) in rotation are configured to enable displacement of the internal gear (30) drive pinion (50) over a sufficient angular range at the end of the teeth of the outer internal gear so that the required meshing force can be reached

5. Device (1) according to any one of the previous claims, **characterised in that** the central movement transmission element (40) is a toothed wheel.

6. Device (1) according to any one of the previous claims, **characterised in that** the internal gear (30) drive pinion (50) is identical to the pinion to be tested (20).

7. Device (1) according to any one of the previous claims, **characterised in that** the central movement transmission element (40) and the pinion to be tested (20), the pinion to be tested (20) and the internal gear (30), the internal gear (30) and the internal gear (30) drive pinion (50) each form a parallel gear system.

8. Device (1) according to any one of the previous claims, **characterised in that** the assembly (2) is driven by rotating a movement transmission element (20, 30, 40, 50) chosen from among the pinion to be tested (20), the internal gear (30), the central movement transmission element (40) and the internal gear drive pinion (50).

9. Method for making a mechanical test of a pinion to be tested (20) using a mechanical test device (1) of a pinion to be tested (20) according to any one of the previous claims, **characterised in that** it comprises at least:
- a step in which the mobile support (60) is rotated about the axis (32) of the internal gear (30), step during which the assembly (2) composed of the pinion to be tested (20), the internal gear (30) with its internal teeth (31), the central movement transmission element (40) and the internal gear (30) drive pinion (50) is forced into movement.
